# EUROPEAN PATENT SPECIFICATION

(11) **EP 3 006 159 B1**
(45) Date of publication and mention of the grant of the patent: **10.04.2019**
(21) Application number: 14004090.8
(22) Date of filing: 04.12.2014
(51) Int. Cl.: B08B 15/04

(54) **Mobile device for cooling of machine tools with exhaustion and filtration of oil mist**
Mobile Vorrichtung zur Kühlung von Werkzeugmaschinen mit Ablassung und Filtrierung von Ölnebel
Dispositif mobile pour le refroidissement de machines-outils avec échappement et filtration de brouillard d'huile

(30) Priority: 10.10.2014 CZ 20140694
(43) Date of publication of application: 13.04.2016
(73) Proprietor: Vysoká Skola Bánská - Technická Univerzita Ostrava, 708 33 Ostrava-Poruba (CZ)
(72) Inventor: Petru, Jana, CZ-70833 Ostrava Poruba (CZ); Mrkvica, Ivan, CZ-70030 Ostrava Výskovice (CZ); Zlámal, Tomás, CZ-77900 Olomouc (CZ); Cep, Robert, CZ-70833 Ostrava Poruba (CZ); Pagác, Marek, CZ-79201 Bruntál (CZ)
(74) Representative: Kendereski, Dusan

(56) References cited:
- WO-A1-93/17801
- WO-A1-2009/044968
- CZ-U1- 26 290
- DE-A1-102009 050 665
- DE-U- 6 913 714

## Description

### Field of the Invention

The invention relates to the structure of a mobile cooling device for machine tools with suction and filtration of oil mist.

### Background of the Invention

The background of the invention provides a device that enables cooling and lubrication of toots, especially tools for deep hole drilling by the action of coolants or oils. These devices are of different designs and embodiments, which enables supplying of cooling mediums to a prior determined place in liquid form, or in the form of aerosol (mixture of coolant and compressed air). Devices are constructed as fixed systems that are parts of machine tools or as additional devices fixed onto the machine tools and their construction does not allow mobility. The construction of commercially available devices itself does not allow suction and filtration of oil mist and resulting fumes from the cooling site.

DE6913714U discloses a mobile cooling device for machine tools with suction and filtration of lubricating fluid, essentially consisting of a reservoir for lubricating fluid, an inlet pump, a pressure hose introducing the lubricating fluid to the tool and a suction device for the removal of lubricating fluid with suction piping between the pumps and the reservoir. The device is used only to lubricate without sufficient supply of compressed air. The device can further introduce the lubricating fluid only to the exterior of the tool, not the interior. The suction of impurities (e.g., metal chips from machining) is provided only from the grooves of the bench and not of the fumes or oil mist from the operating area of the tool. The pump required for this device is a of suction piston and pressure rotation type and is generally used for machine tools and in special machines, e.g. circular saws.

DE102009050665A1 discloses a device being part of a machine tool allowing a semi-dry way of machining. This device produces mist from oil, water and compressed air to machine the workpiece, while the mist is ejected from the device. The device is rigidly fixed to the machine tool or is directly incorporated in its structure (in this case, horizontally). The skilled person therefore cannot use this device for various machines and conditions at the same time, as the construction is not mobile. Furthermore, the device does not allow to suck out and filter the oil mist from the site of machining; on the contrary, it is designed to suck out metal chips from a central reservoir of the machine tool. The compressed air is not introduced simultaneously with the liquid, but by its own inlets, and the mixing occurs only in the mixing chamber before continuing further in the device. The metal chips are sucked out from the part of the device that is sprayed on and the chips are then washed, blown into the collecting container from which they are sucked out by the sucking medium. The compressed air and liquid mixture is reintroduced in the device and again used for washing and cooling. The device requires a source of water, oil, two sources of compressed air, pumps and nozzles. The document does not specify the operating pressures or amounts of the mixture. This invention does not allow to use more types of oils of varying viscosity to produce oil mist. High-viscosity oils cannot be used to wash the nozzles and the machine tool as claimed in this document. No other type of fluid can be used for cooling than the one comprised in that particular machine tool.

Czech utility model application CZ26290U1 discloses a mobile pumping and filtration assembly using oil as cooling medium which is supplied under high pressure to the desired site of a machine tool, thereby the removal of the heat resulting from high speed machining is enabled. This assembly differs from the present invention by the way of cooling, as it does not work on the Minimal Quantity Lubrication (MQL) principle and is not adapted for suction and filtration of oil mist. The oil mist is produced by mixing minimal amount of oil and compressed air. Moreover, the filtration principle of this device is based on capturing solid particles comprised in the oil, not on filtrating air from oil mist produced by lubrication and cooling.

EP0321954 describes a cooling and lubricating device suitable for cooling and lubricating of cutting tools. Cooling and lubricating effect is achieved by using a mixture of gas and liquid, which is sprayed onto the machining site using a nozzle. The structure of the cooling and lubricating device uses a compressor as a source of compressed air, a fluid reservoir, and a mixing chamber. This device has a similar structure; however, it is not mobile and does not allow suction and filtration of oil mist. It is not entirely clear from the description whether it is possible to control the amount of coolant and whether the device works on the Minimum Quantity Lubrication (MQL) principle.

CN203171341U discloses a device for deep hole drilling. The device includes a cooling system, a coolant, and a filtering device. Working pressure of the cooling medium is achieved using a gear pump. The device for liquid filtration uses filters and a magnet. The device differs from the present invention by the principle of cooling and the way of filtration. The device does not allow continuous pressure change and does not work on the Minimum Quantity Lubrication (MQL) principle.

The solution described in DE19842507A1 relates to a device for cooling and lubrication. It uses a compressed air supply, an air line, an oil store, an oil line, and a mixing chamber, in which the mixing of oil and air occurs. This mixture is supplied using a nozzle onto the machining site to provide a cooling effect. The device works on a principle similar to that of the present invention. The difference is in the structure of the device, which does not allow suction and filtration of oil mist, is not mobile, and it is not entirely clear whether the device works on the Minimum Quantity Lubrication (MQL) principle.

CN203210098U discloses a lubricating and cooling device for numerically-controlled machine tool. The device consists of a cooling tank which is connected through the hose with a recycling groove and with a separation block, which allows cooling of the coolant. The separation block comprises an outer casing, a main oil channel, and plurality of auxiliary oil channels, which are arranged inside the outer casing. This device has the advantage of recycling of lubrication oils and cutting fluid reducing the maintenance costs of lubrication oils. It guarantees smooth machining and improves working efficiency. The device differs from the present invention primarily by its structure, and mainly, it does not work on the Minimum Quantity Lubrication (MQL) principle and does not allow suction and filtration of oil mist.

WO2010137409 refers to a cutting liquid supply device. The device works on a principle of cutting fluid and gas mixture supply and generates oil mist. The supply of compressed cutting liquid is secured using a pump and the liquid is transported to the rotary joint on the rotating spindle of the machine tool through a piping. The device has a similar structure to the present invention; however, it does not work on the Minimum Quantity Lubrication (MQL) principle and the device does not allow suction and filtration of oil mist. It is not entirely clear from the description whether said device is mobile and independent from the tool operation.

JP2006102831A discloses an oil mist generator applicable for various machining methods. The device works on the principle of cooling using oil mist which is, however, created by a corona discharge. The generator consists of an oil supply, a charging means for creating electric discharge, and a device for the production and supply of oil mist. The generator differs from the present invention by the way of oil mist production and its structure does not allow suction and filtration of oil mist at the same time. It is not clear from the drawings whether the device structure is mobile and independent from the tool operation.

KR20090035051A discloses an oil mist generator designed for cooling and residue removal. The structure of the device comprises a container for oil mist generating. Mist is generated by mixing of liquid and air and is distributed via emission paths. The device does not work on the Minimum Quantity Lubrication (MQL) principle, is dependent on the external supply of compressed air, and does not allow suction and filtration of oil mist.

EP1211019 discloses a coolant feeding device of machine tool using an oil mist generator located at the tip of a spindle. The structure of the device allows pressure change of the coolant, which is supplied into the mist generator and therefore the right amount of the coolant supply is secured. The device differs from the present invention with its structure, it does not allow suction and filtration of oil mist, and it is not mobile. It is not clear from the description whether the device works on the Minimum Quantity Lubrication (MQL) principle, and whether it is independent from the compressed air supply from the external supply.

WO2012109320 discloses a device, system, and methods available to control the amount of cutting liquid within a CNC or other machining system. The device structure allows the supply of multiple liquids in such a way that the coolant, lubricant, or other liquid can be delivered at different locations at different flow rates. The device allows the change of the flow rate independently or dynamically during the machining operation and the amount of the used medium can be minimized with air or other gases. The device, as well as the present invention, works on a similar principle; however, the device uses the action of pumps for the air compression, not air compressed using the compressor and the mixing unit. Further, the device structure does not allow suction and filtration of oil mist from the machining site and it is not entirely clear whether it is mobile.

US8147683B2 discloses a device with similar function and allows cooling and filtration of oil mist and resulting fumes, it is mobile. However, it differs by a principle of cooling and it does not work on the Minimum Quantity Lubrication (MQL) because it is not allowed by said structure. The device is entirely dependent on the compressed air supply from the external source.

WO9317801A1 discloses a mobile filtration unit for extracting fumes or particles contaminating air produced by welding. The device allows only suction, not cooling or lubrication of the tool or workpiece by oil mist. The filtration is adapted for removing fumes and particles resulting from welding, not for filtrating oil mist. For oil mist to be filtered sufficiently, at least 3-step filtration is required.

WO2009044968 discloses a device for producing oil mist that cools down a machine tool or a workpiece in the course of machining. The construction of this device does not allow suction or filtration of excess oil mist and the operation is completely dependent on external supply of compressed air (no compressed air source in the device). The device is not mobile, which limits its use, and the oil mist needs to be transported in a lenghty manner.

Other embodiments are disclosed in documents JP57008049, JP07001297, WO2013012224A3, JP2010105056A, US20070068961A1, JP07040186, JP10249660 and JP05138492. The mentioned patents, applications, and utility models refer to devices for cooling of machines and tools using a coolant - oil, not oil mist, and they do not work on the Minimum Quantity Lubrication (MQL) principle as it is stated in the present invention.

The invention aims to propose a solution which differs from the known state of the art by a mobile structure that allows suction and filtration of oil mist at the same time. It is also usable for cooling and lubrication of cutting tools, eventually for drills during the drilling of holes, especially deep ones.

### Summary of the Invention

The above mentioned drawbacks are eliminated by a mobile device for cooling of machine tools with suction and filtration of oil mist, which is characterized in that it consists of components arranged on a frame provided with a floor, said frame being divided into two sections via a partition, wherein the frame is covered with a top cover and a front cover, said front cover being provided with an opening for suction piping and with an opening for oil mist supply hose, and furthermore, a control panel with a junction box is arranged in the front cover, the frame being further covered by side covers and a back cover onto which push handles are fixed, and an air compressor is arranged in the lower section of the frame and it is connected through the pressure hose with an oil and air mixing device onto which the oil mist supply hose is connected, wherein a filtration unit with an electric motor is arranged in the upper section of the frame, the filtration unit being connected through the suction piping to a suction nozzle.

The structure of the mobile cooling device itself derives from the requirements of the engineering practice and combines a cooling system, a lubricating system, a suction system, and a system of filtration of oil mist and resulting fumes during the deep hole drilling.

The advantage of the device is that it is provided with the oil mist supply hose that delivers oil mist into the machining site using a nozzle.

During the suction of excess oil mist and fumes from the machining site, it is preferable if the device is provided with a filtration unit with an electric motor connected to the suction nozzle through suction piping.

The mobility of the device is secured using manipulation components (for example, industrial wheels). The device can be easily placed (transported) to the machine tool and it is entirely independent from the machine tool operation and from the compressed air supply from central distribution.

The device is, owing to its structure, entirely independent from the machine tool and from the compressed air supply from central distribution. The uniqueness of the present invention is in its design solution allowing cooling and lubrication using oil mist, but also suction and filtration of oil mist with 90% efficiency. The combination of these operations in a single device makes the deep hole drilling more efficient and easier. The device can be also used in other processes, where efficient cooling and suction with filtration is required.

The advantage of the device is that it uses the Minimum Quantity Lubrication (MQL) principle, during which the minimum amount of process liquids is consumed.

Its structure allows the mobile device to be used for lubrication of moving parts to reduce the effect of friction (friction coefficient) to preserve their correct function.

### Brief Description of the Drawings

The summary of the invention will be clarified with reference to the drawings in which Fig. 1 illustrates the arrangement of the individual parts of the mobile device for cooling of machine tools with suction and filtration of oil mist, Fig. 2 illustrates said device from the side view, Fig. 3 illustrates said device provided with the outer cover, Fig. 4 illustrates an embodiment of said device connected to pressure vessels, that does not fall under the scope of the claims, and Fig. 5 illustrates another embodiment of said device connected to central air distribution, that does not fall under the scope of the claims.

### Description of the Preferred Embodiments

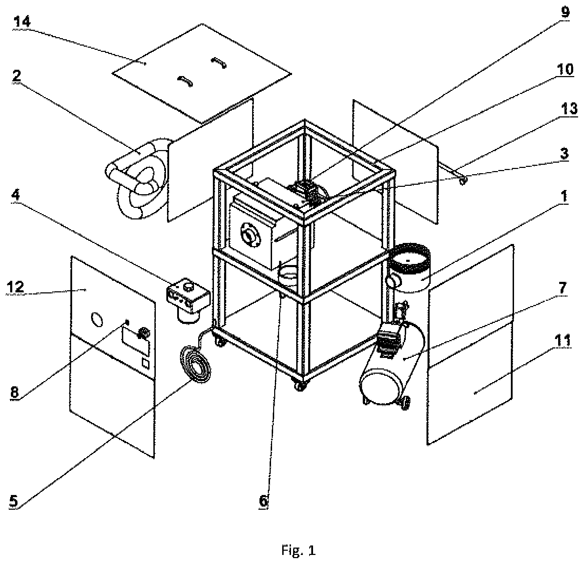

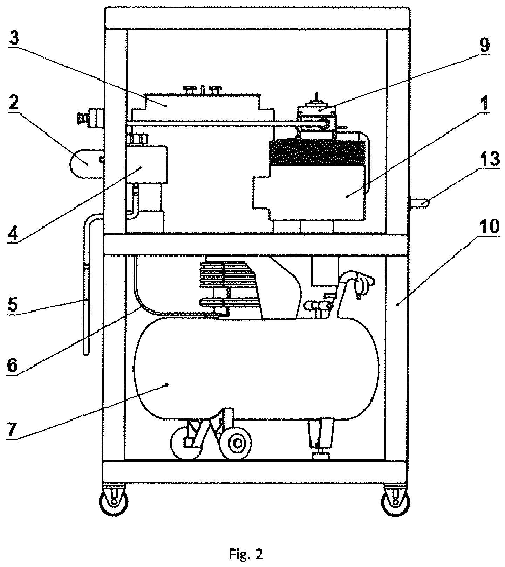

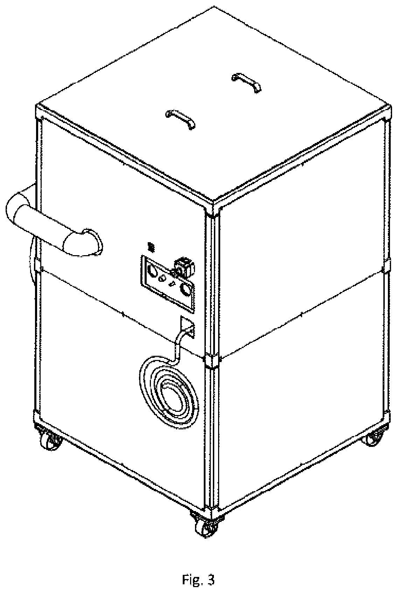

The mobile device for cooling of machine tools with suction and filtration of oil mist is illustrated in Fig. 1, Fig. 2, and Fig. 3. As it is apparent from the drawings, the device is constructed from several components which participate in the device operation and secure the special needs of the deep hole drilling process. The mobile device consists of components attached to a frame **10** provided with a floor, said frame **10** being covered with a top cover **14** and a front cover **12.** Furthermore, the frame **10** is covered with side covers **11** and a back cover **15.** The frame **10** is divided into two sections via a partition **16** comprising an opening for a pressure hose **6.** The front cover **12** is provided with an opening for suction piping **2** as well as an opening for an oil mist supply hose **5**. In the front cover **12** is further arranged a control panel **8** with a junction box. In the upper section of the mobile device is arranged a filtration unit **3** with an electric motor **9** connected through the suction piping **2** to a suction nozzle **1.** In the lower section of the mobile device is arranged an air compressor **7,** which is connected through a pressure hose **6** to an oil and air mixing device **4** provided with the oil mist supply hose **5.**

The function of the mobile device is as follows. Compressed air from the air compressor **7** with a pressure vessel is distributed under minimum operating pressure of 1,5 MPa and with filling capacity of min. 500 l/min to the oil and air mixing device **4.** Therein the oil from the lubricant reservoir, which is a part of the device **4,** is sucked by the action of underpressure and aerosol in the form of oil mist is created. The air suction can be continuously regulated and the amount and concentration of oil mist can be changed using the valves placed on the oil and air mixing device **4.** The device **4** has to operate under the operating pressure of 1,5 MPa and the flow rate of 500 l/min. Resulting oil mist is distributed to the nozzle through the oil mist supply hose **5,** eventually to the central adapter for deep hole drilling, by means of which oil mist is transported via the drill body to the machining site. Excess oil mist and fumes resulting from the machining are sucked using the suction nozzle **1** through the suction piping **2** in the amount of min. 2500 m³/h from the machining site and are filtrated by the three-stage filtration unit **3** with the electric motor **9.**

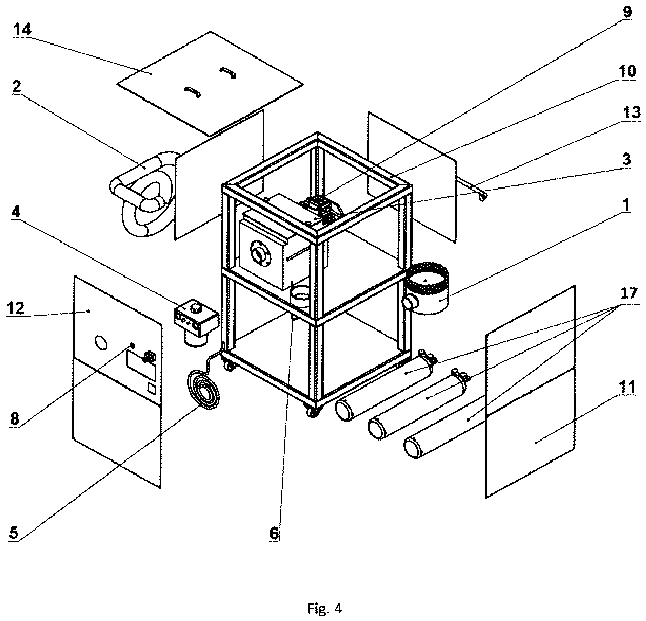

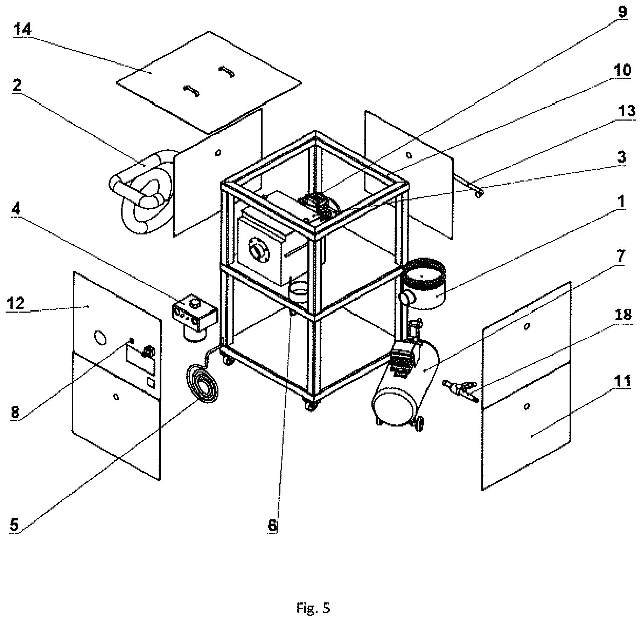

As is apparent from the Fig. 4 and Fig. 5, other unclaimed embodiments of the mobile device are possible, where the supply of compressed air using the air compressor 7 is replaced by the supply of compressed air using the connection **18** from central air distribution, or from pressure vessels **17** comprising compressed air. The requirement of such distribution is the compliance of the required pressure of min. 1 MPa. This pressure value will allow the device operation as well as the mobility of the present invention during the usage of pressure vessels **17** or the central air distribution.

In another unclaimed embodiment the oil and air mixing device **4** may be replaced with other structural design (for example an injection device) for generating of oil mist. However, the device must use the Minimum Quantity Lubrication (MQL) method, operating pressure min. 1 MPa, and minimal flow rate 500 litres per minute. Moreover, multistage filtration with cleanable filters or with changeable filters with suction power min. 2500 m³/h, or oil mist separator with a similar power can be used for filtration of oil mist and resulting fumes.

### Industrial Applicability

The device, owing to its structure and the unique system allowing a combination of operations such as cooling and lubrication using oil mist as well as suction and filtration of oil mist, finds application in all areas of mechanical engineering, in which during the machining of the components the mechanical energy converts into heat, which has to be easily and efficiently removed.

### List of Reference Signs

1 - suction nozzle for excess oil mist and resulting fumes
2 - suction piping for suction of excess oil mist and resulting fumes
3 - filtration unit
4 - oil and air mixing device
5 - oil mist supply hose
6 - pressure hose
7 - air compressor
8 - control panel with a junction box
9 - electric motor of the filtration unit
10 - frame
11 - side cover of the frame
12 - front cover of the frame
13 - push handle / handle for manipulation
14 - top cover of the frame
15 - back cover
16 - partition
17 - pressure vessels
18 - connection from central air distribution

## Claims

1. Mobile cooling device for machine tools with suction and filtration of oil mist, consisting of components arranged on a frame **(10)** provided with a floor, said frame **(10)** being divided into two sections via a partition **(16),** wherein the frame **(10)** is covered with a top cover **(14)** and a front cover (**12**), said front cover **(12)** being provided with an opening for suction piping **(2)** and with an opening for oil mist supply hose (**5**), furthermore in the front cover **(12)** a control panel **(8)** with a junction box is arranged, the frame **(10)** being further covered with side covers (**11**) and a back cover **(15)** onto which push handles **(13)** are fixed, in the lower section of the frame **(10)** an air compressor **(7)** is arranged, said air compressor **(7)** being connected through a pressure hose **(6)** to an oil and air mixing device **(4)** onto which the oil mist supply hose **(5)** is connected, wherein in the upper section of the frame **(10)** a filtration unit **(3)** with an electric motor **(9)** is arranged, the filtration unit **(3)** being connected through the suction piping **(2)** to a suction nozzle (1) for oil mist and fumes.

## Patentansprüche

1. Mobile Kühlvorrichtung für Werkzeugmaschinen mit Absaugung und Filtration von Ölnebel, bestehend aus Komponenten, die an dem Rahmen (**10**) angeordnet sind, der mit einem Boden versehen ist, wobei der Rahmen (**10**) über eine Trennwand (**16**) in zwei Sektionen geteilt ist, wobei der Rahmen (**10**) mit einem oberen Deckel (**14**) und einem vorderen Deckel (**12**) abgedeckt ist, wobei der vordere Deckel (**12**) mit einer Öffnung für die Saugleitung (**2**) und mit einer Öffnung für den Ölnebel-Zuführschlauch (**5**) versehen ist, weiter im vorderen Deckel (**12**) ein Steuerpult (**8**) mit einem Abzweigkasten angeordnet ist, wobei der Rahmen (**10**) weiter mit Seitendeckeln (**11**) und einem Rückendeckel (15) abgedeckt ist, an dem Schiebegriffe (**13**) befestigt sind, im unteren Bereich des Rahmens (**10**) ein Luftkompressor (**7**) angeordnet ist, wobei der Luftkompressor (**7**) über einen Druckschlauch (**6**) an eine Öl-Luft-Mischvorrichtung (**4**) angeschlossen ist, an die ein Ölzuführschlauch **(**5) angeschlossen ist, wobei im oberen Bereich des Rahmens (**10**) eine Filtrationseinheit (**3**) mit einem Elektromotor (**9**) angeordnet ist, wobei die Filtrationseinheit (**3**) durch die Saugleitung (**2**) mit der Absaugdüse (**1**) für Ölnebel und Dünste verbunden ist.

## Revendications

1. Dispositif de refroidissement mobile pour les machines-outils avec l'aspiration et la filtration du brouillard d'huile, constitué de composants disposés sur le cadre (**10**) pourvu d'une planche, ledit cadre (**10**) étant divisé en deux sections par une partition (**16**), ou le cadre (**10**) est recouvert d'un couvercle (**14**) supérieur et d'un couvercle (**12**) avant, ledit couvercle (**12**) avant étant pourvu d'une ouverture pour la tuyauterie (**2**) d'aspiration et d'une ouverture pour le tuyau (**5**) d'alimentation du brouillard d'huile, en plus, dans le couvercle (**12**) avant, un panneau (**8**) de contrôle avec une boîte de jonction est disposé, le cadre (**10**) étant recouvert en outre de couvercles (**11**) latérales et d'un couvercle (**15**) arrière sur lequelle les poignées (**13**) sont fixées, dans la partie inférieure du cadre (**10**) un compresseur (**7**) d'air est disposé, ledit compresseur (**7**) d'air étant relié par un tuyau (**6**) de pression à un mélangeur (**4**) d'huile et d'air auquel le tuyau (**5**) d'alimentation du brouillard d'huile est relié, ou dans la partie supérieure du cadre (**10**) une unité (**3**) de filtration avec un moteur (**9**) électrique est disposée, l'unité (**3**) de filtration étant reliée par la tuyauterie (**2**) d'aspiration à une buse (**1**) d'aspiration pour le brouillard d'huile et les vapeurs.
